# EUROPÄISCHE PATENTSCHRIFT

(11) **EP 0 894 891 B1**
(45) Veröffentlichungstag und Bekanntmachung des Hinweises auf die Patenterteilung: **20.03.2002**
(21) Anmeldenummer: 98108839.6
(22) Anmeldetag: 15.05.1998
(51) Int. Cl.: D21F 1/70, D21B 1/32, D21D 5/02, B03D 1/14

(54) **Verfahren und Vorrichtung zur Entfernung von Feststoffen aus einer wässrigen Faserstoffsuspension**
Process and apparatus to eliminate solids from an aqueous fiber suspension
Procédé et appareil pour éliminer les matières solides d'une suspension de fibres aqueuse

(30) Priorität: 31.07.1997 DE 19733059
(43) Veröffentlichungstag der Anmeldung: 03.02.1999
(73) Patentinhaber: Voith Paper Patent GmbH, 89522 Heidenheim (DE)
(72) Erfinder: Gommel, Axel, 88212 Ravensburg (DE); Kemper, Martin, 88212 Ravensburg (DE)

(56) Entgegenhaltungen:
- GB-A- 2 036 603
- GB-A- 2 106 806
- US-A- 4 624 791
- US-A- 5 335 785

## Beschreibung

Die Erfindung betrifft ein Verfahren zur Entfernung von Feststoffen aus einer wässrigen Faserstoffsuspension gemäß dem Oberbegriff des Anspruchs 1.

Verfahren der genannten Art werden verwendet, um aus einer faserstoffhaltigen Suspension zumindest einen Teil der darin suspendierten Feststoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so daß sie sich ausflotieren lassen (vgl. GB-A-2 036 603). Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die auszuscheidenden Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe) sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfemen. Ungünstig ist es allerdings, daß in vielen Fällen die Trennschärfe nicht ausreicht, d.h. daß zu viele Fasern zusammen mit den Verunreinigungen in den Flotationsschaum gelangen. Sie sind dann entweder verloren oder müssen mühsam zurückgewonnen werden.

Der Erfindung liegt daher die Aufgabe zugrunde, ein Flotationsverfahren zur Entfemung von bestimmten Feststoffen aus einer Faserstoffsuspension zu schaffen, mit dem Verluste an gewünschten Bestandteilen, insbesondere den Fasern, gering sind bei gleichzeitig gutem Entfemungseffekt der unerwünschten Bestandteile.

Diese Aufgabe wird durch die kennzeichnenden Merkmale des Anspruchs 1 in vollem Umfang gelöst.

Der Anspruch 20 betrifft eine Flotationsvorrichtung zur Durchführung des erfindungsgemäßen Verfahrens.
Die Unteransprüche enthalten weitere Merkmale des Verfahrens nach Anspruch 1 bzw. der Flotationsvorrichtung nach Anspruch 20.

Mit Hilfe des erfindungsgemäß eingesetzten Trennelementes wird die z. B. oberhalb dieses Trennelementes ausgebildete wässrige Zwischenschicht von der Faserstoffsuspension getrennt. Durch die Zwischenschicht steigen die Gasblasen auf, bis sie in den Flotationsschaum gelangen. Da die Zwischenschicht einen relativ geringen Anteil an Fasem enthält, werden eventuell noch anhaftende hydrophile Partikel sehr leicht abgespült oder abgewaschen, während die hydrophoben Partikel, also die zu entfernenden Feststoffe, weiterhin eine stabile Verbindung zu den Gasblasen halten können. Die Gefahr des unerwünschten Mitschleppens oder Anlagems von Fasern an die Luftblasen ist dort allein schon wegen ihrer geringen Menge kleiner als in der Faserstoffsuspension. Es findet also insgesamt eine Rückgewinnung der erwünschten Faserbestandteile in der Zwischenschicht statt. Um eine Aufkonzentration der zurückgewonnenen Fasern in der Zwischenschicht zu vermeiden, muß in der Regel ein Teil davon als Überschuß kontinuierlich oder auch turnusmäßig abgeführt werden. Dieser Überschuß kann z.B. der Suspension vor dem Einlauf in die Flotationsvorrichtung zugeführt werden. Er kann aber auch in einer internen Zirkulation durch das Trennelement an bestimmten dafür geeigneten Stellen zurückfließen oder als Verdünnungswasser im Altpapieraufbereitungsprozeß eingesetzt werden.

Das Trennelement führt zu einer Vergleichmäßigung der Strömung; große Wirbel und Querströmungen, die im darunterliegenden Flotationsraum das Anlagern von auszuscheidenden Partikeln begünstigt haben, können nicht in die Zwischenschicht vordringen. Eventuell verbleiben lokal begrenzte Wirbel, und das begünstigt das Abspülen der Fasern. Diese Zwischenschicht ist also arm an Fasern und weist eine relativ ruhige, homogene Strömung auf: Optimale Bedingungen zum Abspülen von hydrophilen Fasern.

Die Erfindung und ihre Vorteile wird beschrieben anhand von Zeichnungen. Dabei zeigen:
- Fig. 1: eine Flotationsvorrichtung zur Durchführung des erfindungsgemäßen Verfahrens;
- Fig. 2: ein Detail der Fig. 1;
- Fig. 3 bis 7: verschiedene Varianten von geeigneten Trennelementen;
- Fig. 8 und 9: zwei weitere zur Durchführung des Verfahrens geeignete Flotationsvorrichtungen.

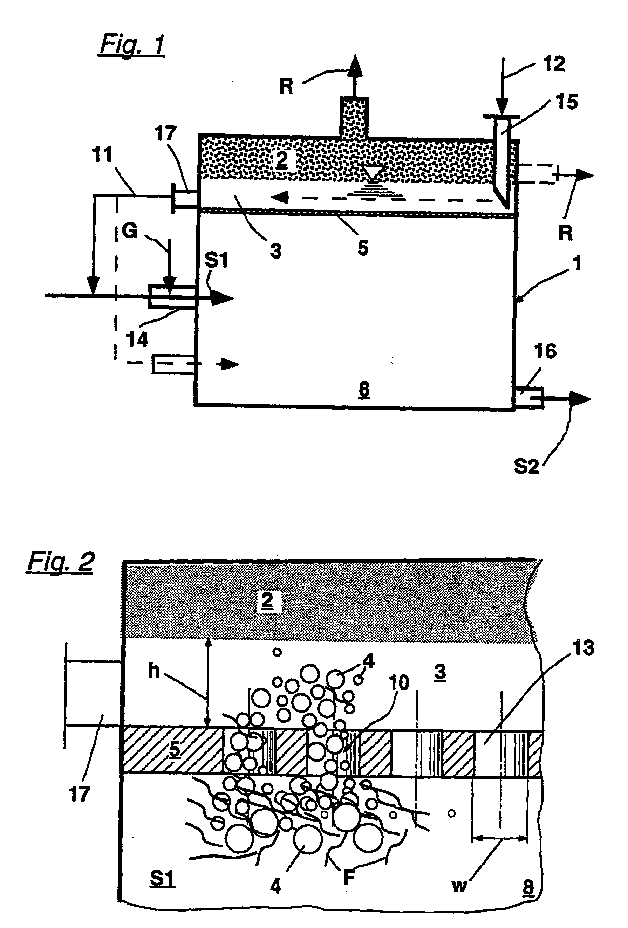

Fig. 1 zeigt sehr schematisch eine Flotationsvorrichtung 1 zur Durchführung des erfindungsgemäßen Verfahrens. Die Suspension S1 tritt durch ein Einlaufrohr 14 in den Flotationsraum 8 der Flotationsvorrichtung 1 ein. In dem hier gezeigten Falle wird sie im Einlaufrohr 14 mit einem Gas G so vermischt, daß die zur Flotation erforderlichen Gasblasen entstehen. Diese steigen im Flotationsraum 8 nach oben, nehmen dabei die angelagerten Feststoffteilchen mit und gelangen an das Trennelement 5, durch das sie hindurchtreten, ohne die anhaftenden Feststoffteilchen zu verlieren. Andererseits sind die Öffnungen in dem Trennelement so gestaltet, daß durch sie hindurch nur ein geringer Anteil der Suspensionsflüssigkeit mitgerissen wird. Somit findet an diesem Trennelement 5 eine Trennung zwischen der Faserstoffsuspension S1 mit relativ hohem Faserstoffgehalt, z.B. um die 1 %, und der oberhalb des Trennelementes 5 sich befindenden Zwischenschicht 3 statt, welche nur einen relativ geringen Anteil von Fasern aufweist. Wie bereits erläutert, kann in der Zwischenschicht 3 ein beträchtlicher Teil der noch an den Luftblasen anhaftenden hydrophilen Bestandteile, insbesondere der Fasern, von den Gasblasen wieder getrennt und mit dem Überschuß 11 durch die Abzugsleitung 17 aus der Flotationsvorrichtung 1 abgeleitet werden kann. Dieser Überschuß 11, der also einen Teil der zurückgewonnenen Fasern, aber möglicherweise auch noch unerwünschte Feststoffpartikel enthält, kann - gemäß dem hier durch durchgezogenen Pfeil - wieder dem Einlaufrohr 14 zugeführt und dann mit der Suspension S1 vermischt werden. Er kann aber auch, wie durch eine gestrichelte Linie angedeutet, direkt wieder in den Flotationsraum 8 eingeleitet werden. Da der Luftgehalt des Überschusses 11 wesentlich geringer ist als der der Faserstoffsuspension S1, erfolgt dieser Rückstrom selbsttätig. Man erkennt femer, daß der Flotationsschaum 2 sich oberhalb der Zwischenschicht 3 befindet. Er kann entweder nach oben abgesaugt werden oder seitlich ablaufen, wobei der seitliche Ablauf gestrichelt gezeichnet ist. Um die Zwischenschicht 3 zu speisen, ist hier eine Zuführeinrichtung 15 für eine Waschflüssigkeit 12 vorgesehen. Durch entsprechende Gestaltung der Flotationsvorrichtung kann eine Querströmung in der Zwischenschicht erzeugt werden. Dabei kann diese als Gegenströmung zur Hauptströmung der Suspension in der Flotationsvorrichtung gewählt werden, wobei die Hauptströmung vom Einlaufrohr 14 zum Auslaufrohr 16 verläuft.

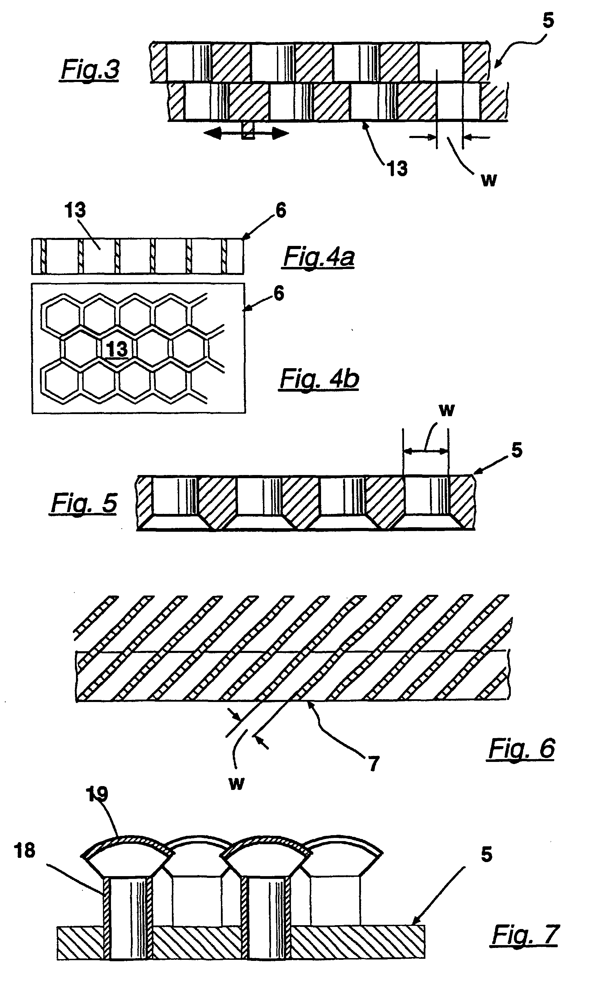

In Fig. 2 sind die Verhältnisse um das Trennelement 5 etwas detaillierter, wenn auch nicht maßstäblich dargestellt. Man erkennt exemplarisch einige Luftblasen 4 sowie einige Fasern F. Die auszuscheidenden hydrophoben Partikel sind nicht dargestellt. Ein Gasblasen-Flüssigkeits-Gemisch 10 durchströmt die Öffnungen 13 des Trennelementes 5. Dieses enthält eine Vielzahl von Öffnungen 13, von denen nur vier gezeigt sind. Sie haben eine lichte Weite w, welche bei Zylinderlöchern gleich dem Durchmesser ist. Werden dagegen Spalte oder ähnliche Öffnungen gewählt, so entspricht die lichte Weite der Spaltweite. Es ist auch möglich, die Öffnungen variabel und einstellbar zu machen, z.B. durch gegeneinander verschiebbare Lochbleche, wie in Fig. 3 gezeigt.

Die Öffnungen 13 müssen nicht zwangsläufig rund sein. Sie können - wie Fig. 4 b zeigt - ein Wabenprofil haben. Das so ausgeführte Trennelement 6 ist gemäß Fig. 4 a in Seitenansicht als Schnitt und gemäß Fig. 4 b als Aufsicht gezeichnet.

Fig. 5 zeigt ein Beispiel, bei dem die Öffnungen 13 im Trennelement 5 nicht gleichmäßig sind, sondern sich z.B. in Durchströmungsrichtung verengen. Auch die Umkehrung, also eine Erweiterung in Durchströmungsrichtung, kann eine sinnvolle Ausführungsform sein.

Das Trennelement 7 gemäß Fig. 6 besteht aus einer Vielzahl von schrägstehenden Lamellen, welche eine besonders gute Trennung der Zwischenschicht von der Faserstoffsuspension gestatten. Auch hier ist die lichte Weite w eingezeichnet. Durch die Schrägstellung der Lamellen wird die an den Schlitzen hindurchtretende Strömung von der Steigrichtung der Gasblasen abgelenkt. Diese Maßnahme kann das Abwaschen von eventuell an den Gasblasen noch anhaftenden Fasern begünstigen. Je nach Strömungsverhältnissen treten lokal begrenzte Wirbel auf, deren Kraft ausreicht, die hydrophilen Fasern abzutrennen, die aber zu schwach sind, um dasselbe bei den hydrophoben Feststoffpartikeln zu bewirken.

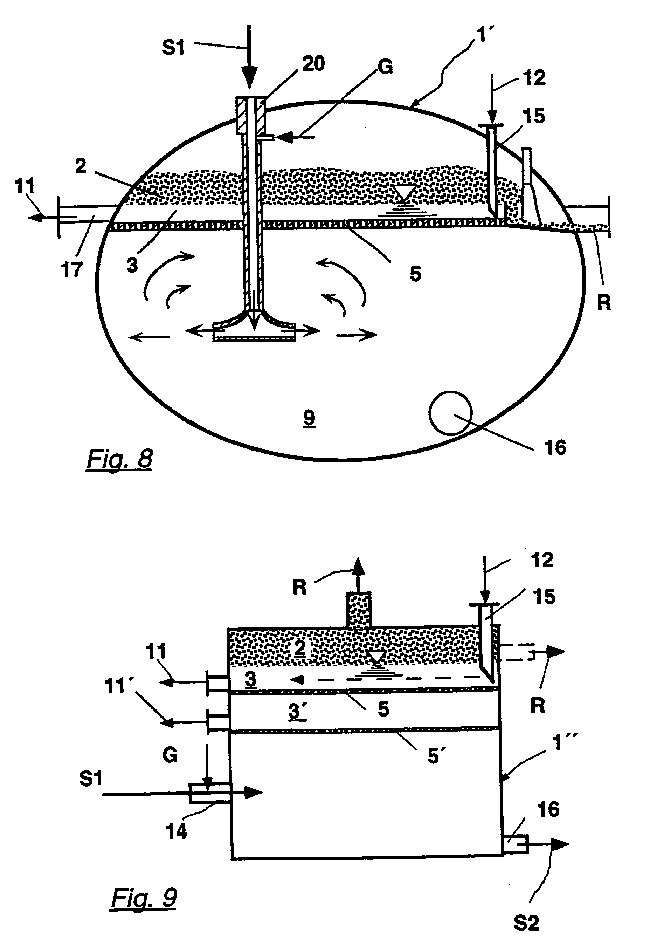

Eine weitere Möglichkeit, in der Zwischenschicht 3 die eben beschriebenen Verhältnisse zu erreichen, also das Abspülen der Fasern, nicht aber der Schmutzpartikel, kann in bestimmten Fällen, wie exemplarisch in Fig. 7 dargestellt, durch einen Glockenboden begünstigt werden. An dem hier gezeigten Beispiel werden die Öffnungen 13 in dem Trennelement 5 durch eingesetzte Rohrstücke 18 verlängert, welche jeweils mit einer Abdeckglocke 19 versehen sind, um die aufsteigende Bewegung der Gasblasen umzulenken und gezielte lokale Turbulenzen zu erzeugen. Glockenböden verschiedenster Art sind bereits bekannt, z.B. in Apparaten der chemischen Industrie.

Fig. 8 zeigt eine Flotationsvorrichtung 1', welche im Gegensatz zu der in Fig. 1 mit einem ovalen Flotationsraum 9 versehen ist. Dabei wird die Faserstoffsuspension S1 durch einen Injektoreinsatz 20 in den Flotationsraum eingeleitet, wobei in dem Injektoreinsatz 20 Zufuhr von Gas G erfolgt. Man erkennt ebenfalls ein als Siebblech ausgeführtes Trennelement 5, über dem sich die Zwischenschicht 3 ausbildet und darüber der Flotationsschaum 2. Der Flotationsschaum 2 wird seitlich über ein Wehr abgeführt, mit Wasser niedergeschlagen und als Rejekt R aus der Flotationsvorrichtung 1' entfernt.

In Fig. 9 ist eine spezielle, in manchen Fällen besonders günstige Variante zu sehen in Form einer Flotationsvorrichtung 1'', welche nicht nur ein sondern zwei übereinanderliegende Trennelemente 5 und 5' aufweist. Dadurch können sich auch zwei Zwischenschichten 3 und 3' ausbilden, welche in der Regel bezüglich des Fasergehaltes eine unterschiedliche Zusammensetzung haben. Bei dieser Variante treten die Gasblasen zuerst durch das untere Trennelement 5' in die erste Zwischenschicht 3, in der bereits ein großer Teil der anhaftenden Fasern abgewaschen und mit dem Überschuß 11' abgeführt werden kann. Auf ihrem weiteren Weg gelangen die Gasblasen durch das darüberliegende Trennelement 5 wiederum in eine Zwischenschicht 3, schleppen aber bereits sehr viel weniger Fasern mit. Daher kann in dieser oberen Zwischenschicht 3 eine noch bessere Abtrennung der Fasern erreicht werden. Selbstverständlich kann man diese Abfolge auch weiter fortführen, indem sich weitere Trennelemente und Zwischenschichten anschließen.

Auch wenn die Zeichnungen durchweg von Flotationsprozessen ausgehen, bei denen die Gasblasen aufgrund des Erd-Schwerefeldes senkrecht nach oben aufsteigen, kann die Erfindung ohne weiteres bei Verfahren angewendet werden, die andere Kraftfelder, z.B. die Zentrifugalkraft, nutzen. Dabei wären etwa in einem Flotationszyklon solche oder ähnliche Lamellen, wie sie in Fig. 6 gezeigt sind, besonders sinnvoll, da sie eine Umfangsbewegung in der Zwischenschicht und damit auch dort die Zentrifugalkraft aufrechterhalten können.

## Patentansprüche

1. Verfahren zur Entfernung von Feststoffen aus einer wässrigen, insbesondere Papierfasern enthaltenden Faserstoffsuspension (S1), bei dem Feststoffe mit Hilfe von Gasblasen aus der Faserstoffsuspension (S1) herausgeführt, in einem Flotationsschaum (2) gesammelt und als Rejekt (R) abgeführt werden, wodurch eine gereinigte Faserstoffsuspension (S2) gebildet wird,
**dadurch gekennzeichnet,**
**daß** die Gasblasen (4), bevor sie in den Flotationsschaum (2) gelangen, zunächst durch ein perforiertes Trennelement (5, 5', 6, 7) aus der Faserstoffsuspension (S1) heraus- und anschließend durch eine wässrige Zwischenschicht (3, 3') hindurchgeführt werden, deren Faserstoffgehalt höchstens 50% des Faserstoffgehaltes der Faserstoffsuspension (S1) ist.

2. Verfahren nach Anspruch 1,
**dadurch gekennzeichnet,**
**daß** der Faserstoffgehalt in der Zwischenschicht (3) höchstens 20 % dessen in der Faserstoffsuspension (S1) ist.

3. Verfahren nach Anspruch 1,
**dadurch gekennzeichnet,**
**daß** die Gasblasen im wesentlichen Luftblasen sind.

4. Verfahren nach Anspruch 2 oder 3,
**dadurch gekennzeichnet,**
**daß** sich die wässrige Zwischenschicht (3,3') in Steigrichtung der Gasblasen (4) in einer Höhe zwischen 50 und 1000 mm erstreckt.

5. Verfahren nach Anspruch 1, 2, 3 oder 4,
**dadurch gekennzeichnet,**
**daß** die wässrige Zwischenschicht durch Zuleitung von einer überwiegend Wasser enthaltenden Waschflüssigkeit (12) gespeist und durch Ableitung des Überschusses (11) erhalten wird.

6. Verfahren nach Anspruch 5,
**dadurch gekennzeichnet,**
**daß** die Waschflüssigkeit (12) im wesentlichen quer zur Steigrichtung der Gasblasen strömt.

7. Verfahren nach einem der voranstehenden Ansprüche,
**dadurch gekennzeichnet,**
**daß** die wässrige Zwischenschicht (3) zumindest teilweise von dem durch das Trennelement (5, 5', 6, 7) strömenden Gasblasen-Flüssigkeits-Gemisch (10) gespeist wird.

8. Verfahren nach einem der voranstehenden Ansprüche,
**dadurch gekennzeichnet,**
**daß** die Öffnungen (13) im Trennelement (5, 5', 6, 7) eine kleinste lichte Weite (w) zwischen 2 und 20 mm haben.

9. Verfahren nach Anspruch 8,
**dadurch gekennzeichnet,**
**daß** die kleinste lichte Weite (w) variabel und einstellbar ist.

10. Verfahren nach einem der Ansprüche 5 bis 9,
**dadurch gekennzeichnet,**
**daß** die Waschflüssigkeit (12) ein chemisches Hilfsmittel enthält, welches das Abtrennen der Fasern von den Gasblasen fördert.

11. Verfahren nach Anspruch 10,
**dadurch gekennzeichnet,**
**daß** das chemische Hilfsmittel Tensid enthält.

12. Verfahren nach einem der voranstehenden Ansprüche,
**dadurch gekennzeichnet,**
**daß** die Strömung des Gasblasen-Flüssigkeits-Gemisches durch das Trennelement (5, 5', 6, 7) zuerst beschleunigt und dann abgebremst wird.

13. Verfahren nach einem der voranstehenden Ansprüche,
**dadurch gekennzeichnet,**
**daß** die Strömung des Gasblasen-Flüssigkeits-Gemisches durch das Trennelement (5, 6, 7) aus der Steigrichtung der Gasblasen seitlich abgelenkt wird.

14. Verfahren nach einem der voranstehenden Ansprüche,
**dadurch gekennzeichnet,**
**daß** der Flüssigkeitstransport durch das Trennelement (5, 5', 6, 7) maximal 5 % des mittleren Durchsatzes der wässrigen Faserstoffsuspension (S1) beträgt.

15. Verfahren nach einem der voranstehenden Ansprüche,
**dadurch gekennzeichnet,**
**daß** in dem Trennelement (5, 5', 6, 7) ein großer Teil der in der Faserstoffsuspension (S1) enthaltenen Turbulenzen beseitigt wird.

16. Verfahren nach Anspruch 15,
**dadurch gekennzeichnet,**
**daß** der Strömungsweg des Gasblasen-Flüssigkeitsgemisches (10) durch das Trennelement (5, 5', 6, 7) mindestens 10 mm lang ist.

17. Verfahren nach einem der voranstehenden Ansprüche,
**dadurch gekennzeichnet,**
**daß** sich oberhalb der wässrigen Zwischenschicht (3) mindestens ein weiteres Trennelement (5') befindet, darüber wiederum mindestens eine weitere Zwischenschicht (3') und daß über der obersten Zwischenschicht (3') der Flotationsschaum (2) gesammelt wird.

18. Verfahren nach einem der voranstehenden Ansprüche,
wobei die zu reinigende Faserstoffsuspension (S1) nacheinander durch mehrere Flotationsvorrichtungen geleitet wird, in denen jeweils ein Teil der Feststoffe mit Hilfe von Gasblasen abgeschieden wird,
**dadurch gekennzeichnet,**
**daß** die Bildung einer oder mehrerer wässrigen Zwischenschichten mit Hilfe von einem oder mehreren Trennelementen lediglich bei einem Teil der Flotationsstufen, und zwar bei den stromabwärtigen erfolgt.

19. Verfahren nach einem der voranstehenden Ansprüche,
**dadurch gekennzeichnet,**
**daß** das Trennelement (5, 5', 6, 7) in Vibration versetzt wird.

20. Flotationsvorrichtung (1, 1', 1'') zur Durchführung des Verfahrens nach einem der voranstehenden Ansprüche mit einem Flotationsraum (8, 9), mit einem Einlaufrohr (14) für die zu behandelnde wässrige Faserstoffsuspension (S1) sowie einem Auslaufrohr (16) zur Ableitung der gereinigten Faserstoffsuspension (S2) und mit einem oberhalb des Flotationsraumes (8, 9) liegenden Sammelraum für den Flotationsschaum (2),
**dadurch gekennzeichnet,**
**daß** der Flotationsraum (8, 9) und der Sammelraum durch ein Trennelement (5, 5', 6, 7) getrennt sind, welches mit einer Vielzahl von Öffnungen (13) versehen ist und daß sich oberhalb des Trennelementes (5, 5', 6, 7) eine Abzugsleitung (17) befindet, welche der Ableitung eines wässrigen Überschusses (11, 11') dient und die so angeordnet ist, daß ihre Einlauföffnung unterhalb des Bereiches liegt, in dem sich während des Betriebes der Flotationsschaum (2) sammelt.

21. Flotationsvorrichtung nach Anspruch 20,
**dadurch gekennzeichnet,**
**daß** eine Zuführeinrichtung (15) für Waschflüssigkeit (12) vorhanden ist, deren Auslauföffnung sich im wesentlichen in der gleichen Höhe befindet wie die Einlauföffnung der Abzugsleitung (17).

22. Flotationsvorrichtung nach Anspruch 20 oder 21,
**dadurch gekennzeichnet,**
**daß** das Trennelement (5, 5') ein Lochblech ist.

23. Flotationsvorrichtung nach Anspruch 20 oder 21,
**dadurch gekennzeichnet,**
**daß** das Trennelement (5, 5') ein grobmaschiges Gewebe ist.

24. Flotationsvorrichtung nach Anspruch 20 oder 21,
**dadurch gekennzeichnet,**
**daß** das Trennelement (7) ein Glockenboden ist.

25. Flotationsvorrichtung nach Anspruch 20 oder 21,
**dadurch gekennzeichnet,**
**daß** das Trennelement (5, 5') aus mindestens zwei gegeneinander verschiebbaren, mit Öffnungen (13) versehenen Platten besteht.

## Claims

1. A process for eliminating solids from an aqueous pulp suspension (S1), in particular one containing paper fibres, in which solids are carried out of the pulp suspension (S1) with the aid of gas bubbles, are collected in a flotation foam (2) and are removed as a reject (R), thereby forming a cleaned pulp suspension (S2),
**characterised in that**
the gas bubbles (4), before entering the flotation foam (2), are first carried out of the pulp suspension (S1) through a perforated separating element (5, 5', 6, 7) and then are passed through an aqueous intermediate layer (3, 3'), the pulp content of which is at most 50% of the pulp content of the pulp suspension (S1).

2. A process according to Claim 1, **characterised in that** the pulp content in the intermediate layer (3) is at most 20% of that in the pulp suspension (S1).

3. A process according to Claim 1, **characterised in that** the gas bubbles are essentially air bubbles.

4. A process according to Claim 2 or 3, **characterised in that** the aqueous intermediate layer (3, 3') extends in a height of between 50 and 1000 mm in the direction of ascent of the gas bubbles (4).

5. A process according to Claim 1, 2, 3 or 4, **characterised in that** the aqueous intermediate layer is fed by supplying a washing liquid (12) containing predominantly water, and is obtained by extracting the excess (11).

6. A process according to Claim 5, **characterised in that** the washing liquid (12) flows essentially transversely to the direction of ascent of the gas bubbles.

7. A process according to one of the preceding claims, **characterised in that** the aqueous intermediate layer (3) is fed at least in part from the gas bubble/liquid mixture (10) flowing through the separating element (5, 5', 6, 7).

8. A process according to one of the preceding claims, **characterised in that** the holes (13) in the separating element (5, 5', 6, 7) have a minimum internal width (w) of between 2 and 20 mm.

9. A process according to Claim 8, **characterised in that** the minimum internal width (w) is variable and adjustable.

10. A process according to one of Claims 5 to 9, **characterised in that** the washing liquid (12) contains a chemical auxiliary which promotes the separation of the fibres from the gas bubbles.

11. A process according to Claim 10, **characterised in that** the chemical auxiliary contains surfactant.

12. A process according to one of the preceding claims, **characterised in that** the flow of the gas bubble/liquid mixture through the separating element (5, 5', 6, 7) is first accelerated and then decelerated.

13. A process according to one of the preceding claims, **characterised in that** the flow of the gas bubble/liquid mixture through the separating element (5, 6, 7) is deflected laterally out of the direction of ascent of the gas bubbles.

14. A process according to one of the preceding claims, **characterised in that** the liquid transported through the separating element (5, 5', 6, 7) is at most 5% of the average throughput of the aqueous pulp suspension (S1).

15. A process according to one of the preceding claims, **characterised in that** a large part of the turbulence contained in the pulp suspension (S1) is overcome in the separating element (5, 5', 6, 7).

16. A process according to Claim 15, **characterised in that** the flow path of the gas bubble/liquid mixture (10) through the separating element (5, 5', 6, 7) is at least 10 mm long.

17. A process according to one of the preceding claims, **characterised in that** at least one further separating element (5') is located above the aqueous intermediate layer (3), and thereover in turn at least one further intermediate layer (3') and that the flotation foam (2) is collected above the uppermost intermediate layer (3').

18. A process according to one of the preceding claims, wherein the pulp suspension (S1) to be cleaned is passed in succession through a plurality of flotation devices, in each of which part of the solids is separated off with the aid of gas bubbles,
**characterised in that**
the formation of one or more aqueous intermediate layers takes place with the aid of one or more separating elements only in a portion of the flotation stages, namely the downstream ones.

19. A process according to any one of the preceding claims, **characterised in that** the separating element (5, 5', 6, 7) is caused to vibrate.

20. A flotation device (1, 1', 1") for performing the process according to one of the preceding claims, comprising a flotation chamber (8, 9), an inlet pipe (14) for the aqueous pulp suspension (S1) to be treated and an outlet pipe (16) for removing the cleaned pulp suspension (S2), and a collecting chamber for the flotation foam (2) located above the flotation chamber (8, 9),
**characterised in that**
the flotation foam (8, 9) and the collecting chamber are separated by a separating element (5, 5', 6, 7) which is provided with a plurality of holes (13) and that an extraction line (17) is located above the separating element (5, 5', 6, 7) which serves to extract an aqueous excess (11, 11') and which is arranged such that its inlet opening lies beneath the region in which the flotation foam (2) collects during operation.

21. A flotation device according to Claim 20, **characterised in that** a supply means (15) for washing liquid (12) is present, the outlet opening of which is at substantially the same height as the inlet opening of the extraction line (17).

22. A flotation device according to Claim 20 or 21, **characterised in that** the separating element (5, 5') is a perforated plate.

23. A flotation device according to Claim 20 or 21, **characterised in that** the separating element (5, 5') is a coarse-meshed fabric.

24. A flotation device according to Claim 20 or 21, **characterised in that** the separating element (7) is a bubble tray.

25. A flotation device according to Claim 20 or 21, **characterised in that** the separating element (5, 5') consists of at least two plates which are displaceable relative to each other and are provided with holes (13).

## Revendications

1. Procédé pour éliminer des matières solides d'une suspension aqueuse de matière fibreuse (S1), contenant en particulier des fibres de papier, dans lequel les matières solides sont extraites de la suspension de matière fibreuse (S1) à l'aide de bulles de gaz, recueillies dans une mousse de flottation (2) et évacuées en tant que rejet (R), de sorte qu'il se forme une suspension de matière fibreuse épurée (S2), **caractérisé en ce qu'**avant de parvenir dans la mousse de flottation (2), les bulles de gaz (4) passent d'abord de la suspension de matière fibreuse (S1) par un élément de séparation perforé (5, 5', 6, 7) puis passent à travers une couche intermédiaire aqueuse (3, 3') dont la teneur en matière fibreuse est au plus égale à 50 % de la teneur en matière fibreuse de la suspension de matière fibreuse (S1).

2. Procédé selon la revendication 1, **caractérisé en ce que** la teneur en matière fibreuse de la couche intermédiaire (3) est au plus égale à 20 % de celle de la suspension de matière fibreuse (S1).

3. Procédé selon la revendication 1, **caractérisé en ce que** les bulles de gaz sont essentiellement des bulles d'air.

4. Procédé selon la revendication 2 ou 3, **caractérisé en ce que** la couche intermédiaire aqueuse (3, 3') s'étend, dans le sens de montée des bulles de gaz (4), à une hauteur comprise entre 50 et 1 000 mm.

5. Procédé selon la revendication 1, 2, 3 ou 4, **caractérisé en ce que** la couche intermédiaire aqueuse est alimentée par arrivée d'un liquide de lavage (12) contenant principalement de l'eau, et est maintenue par évacuation de l'excédent (11).

6. Procédé selon la revendication 5, **caractérisé en ce que** le liquide de lavage (12) s'écoule sensiblement transversalement au sens de montée des bulles de gaz.

7. Procédé selon l'une des revendications précédentes, **caractérisé en ce que** la couche intermédiaire aqueuse (3) est alimentée au moins partiellement par le mélange de bulles de gaz et de liquide (10) s'écoulant à travers l'élément de séparation (5, 5', 6, 7).

8. Procédé selon l'une des revendications précédentes, **caractérisé en ce que** les orifices (13) de l'élément de séparation (5, 5', 6, 7) ont une ouverture libre minimale (w) comprise entre 2 et 20 mm.

9. Procédé selon la revendication 8, **caractérisé en ce que** l'ouverture libre minimale (w) est variable et réglable.

10. Procédé selon l'une des revendications précédentes, **caractérisé en ce que** le liquide de lavage (12) contient un adjuvant chimique qui favorise la séparation des fibres et des bulles de gaz.

11. Procédé selon la revendication 10, **caractérisé en ce que** l'adjuvant chimique contient un tensioactif.

12. Procédé selon l'une des revendications précédentes, **caractérisé en ce que** l'écoulement du mélange de bulles de gaz et du liquide à travers l'élément de séparation (5, 5', 6, 7) est d'abord accéléré, puis freiné.

13. Procédé selon l'une des revendications précédentes, **caractérisé en ce que** l'écoulement du mélange de bulles de gaz et de liquide à travers l'élément de séparation (5, 6, 7) est dévié latéralement depuis le sens de montée des bulles de gaz.

14. Procédé selon l'une des revendications précédentes, **caractérisé en ce que** le transport de liquide à travers l'élément de séparation (5, 5', 6, 7) est au maximum de 5 % du débit moyen de la suspension de matière fibreuse aqueuse (S1).

15. Procédé selon l'une des revendications précédentes, **caractérisé en ce qu'**une grande partie des turbulences contenues dans la suspension de matière fibreuse (S1) est éliminée dans l'élément de séparation (5, 5', 6, 7).

16. Procédé selon la revendication 15, **caractérisé en ce que** le parcours d'écoulement du mélange de bulles de gaz et de liquide (10) à travers l'élément de séparation (5, 5', 6, 7) a une longueur d'au moins 10 mm.

17. Procédé selon l'une des revendications précédentes, **caractérisé en ce qu'**au-dessus de la couche intermédiaire aqueuse (3) se trouve au moins un autre élément de séparation (5'), au-dessus de celui-ci à nouveau au moins une autre couche intermédiaire (3') et **en ce qu'**au-dessus de la couche intermédiaire la plus haute (3') est recueillie la mousse de flottation (2).

18. Procédé selon l'une des revendications précédentes, dans lequel la suspension de matière fibreuse (S1) à épurer est guidée successivement à travers plusieurs dispositifs de flottation dans chacun desquels une partie des matières solides est séparée à l'aide de bulles de gaz, **caractérisé en ce que** la formation d'une ou de plusieurs couches intermédiaires aqueuses à l'aide d'un ou de plusieurs éléments de séparation s'effectue uniquement pour une partie des étages de flottation, à savoir pour ceux situés en aval.

19. Procédé selon l'une des revendications précédentes, **caractérisé en ce que** l'élément de séparation (5, 5', 6, 7) est mis en vibration.

20. Dispositif de flottation (1, 1', 1") pour la mise en oeuvre du procédé selon l'une des revendications précédentes comportant une chambre de flottation (8, 9) avec un tube d'entrée (14) pour la suspension de matière fibreuse aqueuse (S1) à traiter, ainsi qu'un tube de sortie (16) pour l'évacuation de la suspension de matière fibreuse (S2) épurée et comportant une chambre de collecte, située au-dessus de la chambre de flottation (8, 9) pour la mousse de flottation (2), **caractérisé en ce que** la chambre de flottation (8, 9) et la chambre de collecte sont séparées par un élément de séparation (5, 5', 6, 7) qui est pourvu d'une pluralité d'orifices (13), et **en ce qu'**au-dessus de l'élément de séparation (5, 5', 6, 7) se trouve un conduit de soutirage (17) qui sert à l'évacuation d'un excédent aqueux (11, 11') et qui est disposé de manière que son ouverture d'entrée se situe en-dessous de la zone dans laquelle est recueillie la mousse de flottation (2) pendant le fonctionnement.

21. Dispositif de flottation selon la revendication 20, **caractérisé en ce qu'**il est prévu un dispositif d'amenée (15) pour le liquide de lavage (12) dont l'ouverture de sortie se trouve sensiblement à même hauteur que l'ouverture d'entrée du conduit de soutirage (17).

22. Dispositif de flottation selon la revendication 20 ou 21, **caractérisé en ce que** l'élément de séparation (5, 5') est une tôle perforée.

23. Dispositif de flottation selon la revendication 20 ou 21, **caractérisé en ce que** l'élément de séparation (5, 5') est un tissu à mailles grossières.

24. Dispositif de flottation selon la revendication 20 ou 21, **caractérisé en ce que** l'élément de séparation (7) est un fond en cloche.

25. Dispositif de flottation selon la revendication 20 ou 21, **caractérisé en ce que** l'élément de séparation (5, 5') est constitué d'au moins deux plaques qui peuvent coulisser l'une par rapport à l'autre et qui sont pourvues d'orifices (13).
